# EUROPÄISCHE PATENTSCHRIFT

(11) **EP 3 505 330 B1**
(45) Veröffentlichungstag und Bekanntmachung des Hinweises auf die Patenterteilung: **23.11.2022**
(21) Anmeldenummer: 18208134.9
(22) Anmeldetag: 23.11.2018
(51) Int. Cl.: B29C 70/12, B29C 70/88, B29C 70/46, B32B 5/18, B32B 15/04, B32B 15/08, B29D 99/00, B29C 43/18, B64C 3/20, B64C 5/00, B64C 9/00, B64D 11/06, B64C 1/00, B32B 15/02, B32B 15/082, B32B 15/09, B32B 15/092

(54) **VERFAHREN ZUR HERSTELLUNG EINES FASERVERBUNDSANDWICHMATERIALS ENTHALTEND FORMGEDÄCHTNISLEGIERUNGEN**
METHOD FOR MANUFACTURING A FIBRE COMPOSITE SANDWICH MATERIAL CONTAINING SHAPE MEMORY ALLOYS
MÉTHODE DE FABRICATION D'UN MATÉRIAU STRATIFIÉ COMPOSITE RENFORCÉ PAR DES FIBRES CONTENANT DES ALLIAGES À MÉMOIRE DE FORME

(30) Priorität: 29.12.2017 DE 202017107958 U
(43) Veröffentlichungstag der Anmeldung: 03.07.2019
(73) Patentinhaber: Airbus Operations GmbH, 21129 Hamburg (DE)
(72) Erfinder: Fette, Marc, 21129 Hamburg (DE); Hentschel, Martin, 21129 Hamburg (DE)

(56) Entgegenhaltungen:
- DE-A1- 10 028 693
- US-A1- 2015 027 631

## Beschreibung

### Gebiet der Erfindung

Die Erfindung betrifft ein Verfahren gemäß Anspruch 1 zur Herstellung eines Sandwichbauteils umfassend wenigstens zwei Deckschichten sowie eine Kernschicht, welche Drähte aus Formerinnerungsmetall beinhaltet.

### Hintergrund der Erfindung

Bei der Herstellung von Faserverbundwerkstoffen kann eine Mehrzahl an Lagen aus Fasermaterial übereinander geschichtet und anschließend ausgehärtet werdem, was auch als Konsolidieren bezeichnet wird. Das Aushärten wird ermöglicht durch ein Matrixmaterial. Dieses kann reaktives Harz sein (thermoset) oder ein nicht reaktiver schmelzbarer Kunststoff findet Verwendung (Thermoplast). Entweder befindet sich das Matrixmaterial bereits auf den Fasern (sogenannte Prepregs) oder das Matrixmaterial wird in das Fasermaterial injiziert. Das nicht ausgehaertete oder noch nicht vollstaendig ausgehaertete Material bezeichnet man als Halbzeug.

Eine andere Möglichkeit zur Herstellung von Faserverbundwerkstoffen ist es eine Mischung aus Matrixmaterial und Langfasern als Pressmasse in einer Form unter Druck und Temperatur auszuhärten. Solche langfaserverstärkten Pressmassen mit duromerer Matrix weisen Langfasern mit einer mittleren Faserlänge im Bereich zwischen 10mm und 79mm, vorzugsweise im Bereich zwischen 25mm und 50mm auf. Bei den Langfasern handelt es sich um Kohle- oder Glasfasern, die als Wirrfasern, das heißt quasiisotrop, in eine Matrix basierend auf duromeren beziehungsweise duroplastischen Reaktionsharzen, wie zum Beispiel ungesättigten Polyester-, Vinylester-, Epoxid- oder Polyaryletheramidharzen, eingebettet sind. Sie werden als Sheet Moulding Compound (SMC) oder Bulk Moulding Compound (BMC) bezeichnet. BMC unterscheiden sich von SMC dadurch, dass sie auch in der Dickenrichtung eine wesentliche Ausdehnung aufweisen.

Unter Sandwichbauteilen versteht man Faserverbundbauteile, die mehrschichtig aufgebaut sind und zwischen Deckschichten wenigstens eine Kernschicht aufweisen. Diese Kernschicht kann Holz, Schaum, ein Wabenkern sein. Dadurch ist es möglich verhältnismäßig leichte Bauteile herzustellen, deren mechanische Eigenschaften nicht durch ein Bauteil aus massivem Faserverbundmaterial gleichen Gewichts erreicht werden.

Formgedächtnislegierungen (Abkürzung FGL, englisch shape memory alloy, Abkürzung SMA) sind spezielle Metalle, die in zwei unterschiedlichen Kristallstrukturen existieren können. Sie werden oft auch als Memorymetalle bezeichnet. Dies rührt von dem Phänomen her, dass sie sich an eine frühere Formgebung trotz nachfolgender starker Verformung scheinbar "erinnern" können. Während die meisten Metalle immer dieselbe Kristallstruktur bis zu ihrem Schmelzpunkt besitzen, haben Formgedächtnislegierungen, abhängig von der Temperatur, zwei unterschiedliche Strukturen oder Phasen. Die Formwandlung basiert damit auf der temperaturabhängigen Gitterumwandlung zu einer dieser beiden Kristallstrukturen. Es gibt in der Regel eine Austenit genannte Hochtemperaturphase und eine Niedertemperaturphase (Martensit). Beide können durch Temperaturänderung reversibel ineinander übergehen, was als Zweiwegeffekt bezeichnet wird.

Die Strukturumwandlung kann durch eine Temperaturänderung hervorgerufen werden.

Im Fahrzeug- und Flugzeugbau werden neben sehr vielen starren oder steifen Bauteilen auch solche verwendet, die eine gezielte Formänderung ermöglichen. Beispiele dafür sind Sitz- oder Liegeflächen sowie fluiddynamische Steuerungselemente wie Ruder, Segel oder Förderkanäle. Meist umfassen solche ihre Form ändernde Bauteile ein flexibles Element, sei es durch gelenkige Verbindung mehrerer Teilflächen oder ein reversibel verformbares Flächenelement, beispielsweise aus Tuch oder einem dünnen plattenförmigen Blech oder Blatt sowie einem Stellapparat, mit dessen Hilfe eine Formänderung des Bauteils erreicht wird.

US2015/0027631 offenbart Verbundwerkstoffe für den Luft- und Raumfahrtbereich mit eingebetteten Metallfasern zum Dämpfen von Lärm und Schwingungen.

DE10028693A1 offenbart Faserverbundbauteile aus Naturfasern mit Formgedächtnislegierungen.

Ausgehend von alldem stellte sich daher die Aufgabe, verbesserte verstellbare flächige Bauteile bereitzustellen, die eine einfache Steuerung erlauben.

### Beschreibung der Erfindung

Es hat sich nun für den Fachmann völlig überraschend herausgestellt, dass ein Sandwichbauteil (1') umfassend wenigstens zwei Deckschichten (3', 5') sowie eine Kernschicht (7'), welche Drähte (24) aus Formerinnerungsmetall beinhaltet, den Nachteilen des Standes der Technik abhilft.

Erfindungsgemäß ist das Sandwichbauteil durch ein Verfahren mit den folgenden Schritten erhaltet:
(a) Bereitstellen einer Pressvorrichtung (11) mit einem ersten Werkzeugteil (13) und einem zweiten Werkzeugteil (15), die zwischen einer geschlossenen Stellung (17), in der sie eine Kavität (9) einschließen, und einer geöffneten Stellung (19), in der die Kavität (9) zur Umgebung geöffnet ist, relativ zueinander bewegt werden können, wobei das erste Werkzeugteil (13) und/oder das zweite Werkzeugteil (15) beheizbar sind,
(b) Bereitstellen eines Sandwichhalbzeugs (1) mit einer ersten Deckschicht-Halbzeuglage (3) aus einer Langfaserverstärkten Pressmasse mit duromerer Matrix, einer zweiten Deckschicht-Halbzeuglage (5) aus einer langfaserverstärkten Pressmasse mit duromerer Matrix und zwischen diesen einer Kernschicht-Halbzeuglage (7), welche Drähte (24) aus Formerinnerungsmetall beinhaltet,
(c) in der geöffneten Stellung (19) der Pressvorrichtung (11) Einfügen des Sandwichhalbzeugs (1) in die Kavität (9),
(d) Bewegen des ersten und des zweiten Werkzeugteils (13, 15) relativ zueinander in die geschlossene Stellung (17),
(e) Zusammendrücken des ersten und des zweiten Werkzeugteils (13, 15), so dass das Sandwichhalbzeug (1) einen bestimmten Pressdruck erfährt, und Beheizen des ersten und/oder des zweiten Werkzeugteils (13, 15), so dass das Sandwichhalbzeug (1) eine bestimmte Verarbeitungstemperatur erfährt, wobei die Pressvorrichtung (11) einen Abstandshalter (21) aufweist, der in der geschlossenen Stellung (17) den minimalen Abstand zwischen dem ersten und dem zweiten Werkzeugteil (13, 15) definiert und damit die minimalen Abmessungen der Kavität (9) festlegt, und wobei der Abstandshalter (21) derart eingestellt wird, dass der Pressdruck in der geschlossenen Stellung (17) zwischen einem minimalen Verarbeitungsdruck der ersten und/oder der zweiten Deckschicht-Halbzeuglage (3, 5) und einem für die Kernschicht-Halbzeuglage (7) maximal zulässigen Grenzdruck liegt. Weiter bevorzugt ist es, wenn die Drähte (24) aus Formerinnerungsmetall in der Kernschicht (7') im Wesentlichen parallel zueinander angeordnet sind. Weiter bevorzugt ist es, wenn die Drähte (24) aus Formerinnerungsmetall in der Kernschicht (7') zueinander im Wesentlichen in Form eines Gewebes angeordnet sind. Weiter bevorzugt ist es, wenn die Drähte (24) aus Formerinnerungsmetall in der Kernschicht (7') beheizbar sind. Weiter bevorzugt ist es, wenn die Matrix der Deckschichten aus Epoxy-, Vinylester-, Phenol- oder ungesättigtem Polysesterharz besteht. Weiter bevorzugt ist es, wenn die Kernschicht (7) aus einem Elastomer besteht. Weiter bevorzugt ist es, wenn die Kernschicht (7) aus EPDM, BR und/oder EVA besteht. Weiter bevorzugt ist es, wenn die Kernschicht (7) aus EPDM, BR und EVA besteht. Weiter bevorzugt ist es, wenn die Kernschicht (7) aus Elastomer in Form kalandierter Folien besteht. Weiter bevorzugt ist es, wenn die Zwischenschicht (7) aus Elastomer in Form einer Mehrzahl kalandierter Folien besteht, zwischen denen die Drähte (24) aus Formerinnerungsmetall angeordnet sind. Weiter bevorzugt ist es, wenn die Drähte (24) aus Formerinnerungsmetall elektrisch beheizbar sind. Weiter bevorzugt ist es, wenn die Drähte (24) aus Formerinnerungsmetall elektrisch beheizbar sind, indem an sie selbst eine elektrische Spannung angelegt werden kann. Weiter bevorzugt ist es, wenn die Drähte (24) aus Formerinnerungsmetall durch Induktion beheizbar sind. Weiter bevorzugt ist es, wenn die Drähte (24) aus Formerinnerungsmetall mittels einer Kühlvorrichtung temperiert werden können.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### Detaillierte Beschreibung von Ausführungsformen

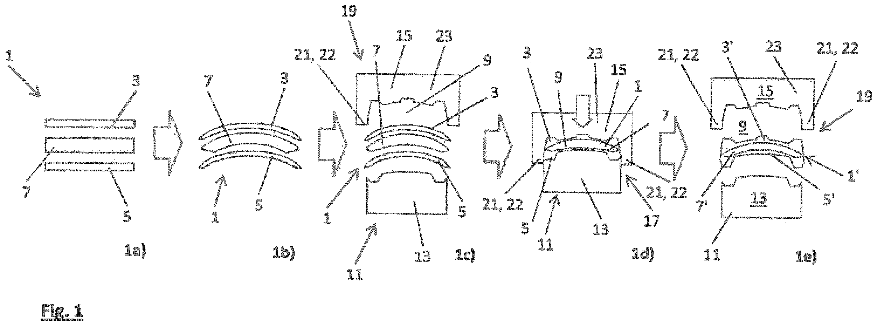

In Fig. 1 ist ein Verfahren zum Herstellen eines Sandwichbauteils 1' gemäß der vorliegenden Erfindung dargestellt. Bei dem Verfahren handelt es sich um ein Fließpressverfahren, welches die folgenden Schritte aufweist.

Wie in Fig. 1a gezeigt, wird zunächst ein Sandwichhalbzeug 1 bereitgestellt, welches eine erste Deckschicht-Halbzeuglage 3, eine zweite Deckschicht-Halbzeuglage 5 und zwischen der ersten und der zweiten Deckschicht-Halbzeuglage 3, 5 eine Kernschicht-Halbzeuglage 7 aufweist. Die erste und die zweite Deckschicht-Halbzeuglage 3, 5 sind als SMC-Halbzeuglagen gebildet und weisen eine langfaserverstärkte Pressmasse mit duromerer Matrix auf, wobei Kohle- oder Glasfasern mit einer mittleren Faserlänge zwischen 25mm und 50mm als Wirrfasern in einem duromeren Reaktionsharz eingebettet sind. Die Kernschicht-Halbzeuglage 7 ist aus Schaummaterial gebildet, in das Drähte aus Formerinnerungslegierung eingebettet sind. Die Drähte aus Formerinnerungslegierung können im Wesentlichen unidirektional ausgerichtet sein, ein 90°-Gewebe oder -Gelege bilden.

Anschließend wird, wie in Fig. 1b gezeigt, das Sandwichhalbzeug 1 für den Pressvorgang vorbereitet, wobei das Sandwichhalbzeug 1 vorgeformt und zugeschnitten wird, um auf diese Weise an die Form der Kavität 9 einer Pressvorrichtung 11 angepasst zu werden. Dabei wird die Kernschicht-Halbzeuglage 7 aus Schaum mit Drähten aus Formerinnerungsmetall vorgeheizt, so dass ihr Volumen beim Einfügen in die Kavität 9 ca. 80% des Volumens der Kernschicht 7' des fertiggestellten Sandwichbauteils 1' einnimmt. Anschließend wird das vorbereitete Sandwichhalbzeug 1 in die Kavität 9 der Pressvorrichtung 11 eingelegt, wie in Fig. 1c dargestellt. Die Pressvorrichtung 11 weist ein erstes Werkzeugteil 13 und ein zweites Werkzeugteil 15 auf, die zwischen einer geschlossenen Stellung 17, in der sie die Kavität 9 einschließen, und einer geöffneten Stellung 19, in der die Kavität 9 zur Umgebung geöffnet ist, relativ zueinander bewegt werden können. Die Pressvorrichtung 11 ist in dem vorliegenden Ausführungsbeispiel als Tauchkantenwerkzeug ausgebildet, wobei das erste Werkzeugteil 13 als Matrize und das zweite Werkzeugteil 15 als Stempel gebildet ist. Das erste Werkzeugteil 13 ist unbeweglich und das zweite Werkzeugteil 15 bewegt sich von der geöffneten Stellung 19 in die geschlossene Stellung 17 in vertikaler Richtung von oben auf das erste Werkzeugteil 13 zu. Das erste Werkzeugteil 13 und das zweite Werkzeugteil 15 sind kontrolliert beheizbar. Die Form der Kavität 9 entspricht der Form des herzustellenden Sandwichbauteils 1'.

Wie in Fig. 1d dargestellt, wird das zweite Werkzeugteil 15 nun auf das erste Werkzeugteil 13 zubewegt, so dass die Pressvorrichtung 11 in die geschlossene Stellung 17 gebracht wird. In der geschlossenen Stellung 17 wird das zweite Werkzeugteil 15 mit einer solchen Kraft auf das erste Werkzeugteil 13 gedrückt, dass das in der Kavität 9 befindliche Sandwichhalbzeug 1 einen bestimmten Pressdruck erfährt, der erforderlich ist, um das Sandwichhalbzeug 1 zu formen und auszuhärten. Gleichzeitig wird das erste und das zweite Werkzeugteil 13, 15 derart beheizt, dass das Sandwichhalbzeug 1 eine bestimmte Verarbeitungstemperatur, im vorliegenden Fall zwischen 140° und 150°C erfährt. Auf diese Weise wird das Sandwichhalbzeug 1 fließgepresst, das heißt, in die beabsichtigte Form, nämlich die Form der Kavität 9, gebracht, wobei die Matrix der Deckschicht-Halbzeuglagen 3, 5 in einen Fließzustand versetzt wird, und anschließend ausgehärtet wird.

Um den Schaum der Kernschicht-Halbzeuglage 7 durch den Pressdruck nicht zu zerstören, weist die Pressvorrichtung 11 einen Abstandshalter 21 auf, der in der geschlossenen Stellung 17 den minimalen Abstand zwischen dem ersten und dem zweiten Werkzeugteil 13, 15 definiert und damit die minimale Abmessung der Kavität 9 und somit den maximalen Pressdruck festlegt. Der Abstandshalter 21 ist in Abhängigkeit von der Geometrie der Kavität 9 und den Materialien der Deckschicht-Halbzeuglagen 3, 5 und der Kernschicht-Halbzeuglage 7 derart eingestellt, dass der Pressdruck in der geschlossenen Stellung 17, wenn der Abstandshalter 21 den Abstand zwischen dem ersten und dem zweiten Werkzeugteil 13, 15 auf den Mindestabstand begrenzt, zwischen einem minimalen Verarbeitungsdruck der ersten und der zweiten Deckschicht-Halbzeuglage 3, 5 und einem für die Kernschicht-Halbzeuglage 7 maximal zulässigen Grenzdruck liegt. Der Abstandshalter 21 ist in der voliegenden Ausführungsform als Anschlagelement 22 ausgebildet, welches an dem zweiten Werkzeugteil 15 seitlich der Kavität 9 vorgesehen ist und bei einer Bewegung in die geschlossene Stellung 17 an dem ersten Werkzeugteil 13 anschlägt, um auf diese Weise den minimalen Abstand zwischen dem ersten und dem zweiten Werkzeugteil 13, 15 festzulegen. Ferner ist eine Steuerungsvorrichtung 23 vorgesehen, welche die Bewegung des zweiten Werkzeugteils 15 auf das erste Werkzeugteil 13 zu in die geschlossene Stellung 17 oder die Kraft, mit der das zweite Werkzeugteil 15 auf das erste Werkzeugteil 13 drückt, derart steuert, dass der Druck des ersten und des zweiten Werkzeugteils 13, 15 auf das Sandwichhalbzeug 1 vor dem Anschlagen des Anschlagelements 22 und Erreichen des Pressdrucks nur sehr langsam erhöht wird.

Wie in Fig. 1e gezeigt, wird nachdem das Sandwichbauteil 1' fertig ausgehärtet ist, das zweite Werkzeugteil 15 von dem ersten Werkzeugteil 13 wegbewegt und in die geöffnete Stellung 19 gebracht, wonach das fertiggestellte Sandwichbauteil 1' aus der Pressvorrichtung 11 entnommen wird. Das Sandwichbauteil 1' weist eine Kernschicht 7' aus Schaum mit Drähten aus Formerinnerungsmetall sowie eine erste und eine zweite Deckschicht 3', 5' aus faserverstärktem Kunststoff auf.

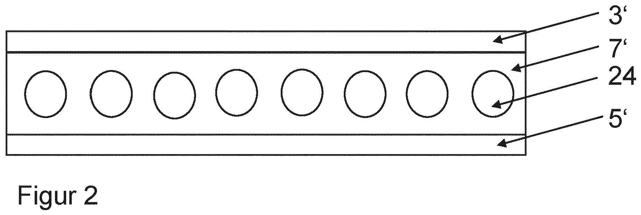

Figur 2 zeigt ein Material, das eine erste und eine zweite Deckschicht 3', 5' aus faserverstärktem Kunststoff sowie eine Kernschicht 7' aus Schaum oder Elastomer sowie darin eingebetteten Drähten (24) aus Formerinnerungsmetall.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind. In den Ansprüchen schließt das Wort "aufweisend" nicht andere Elemente aus und der unbestimmte Artikel "ein" schließt eine Mehrzahl nicht aus.

Die Bezugszeichen in den Ansprüchen sollen nicht den Umfang der Ansprüche beschränken.

## Patentansprüche

1. Verfahren zur Herstellung eines Sandwichbauteils (1') umfassend wenigstens zwei Deckschichten (3', 5') sowie eine Kernschicht (7'), welche Drähte (24) aus Formerinnerungsmetall beinhaltet, wobei das Verfahren folgende Schritte umfasst:
(a) Bereitstellen einer Pressvorrichtung (11) mit einem ersten Werkzeugteil (13) und einem zweiten Werkzeugteil (15), die zwischen einer geschlossenen Stellung (17), in der sie eine Kavität (9) einschließen, und einer geöffneten Stellung (19), in der die Kavität (9) zur Umgebung geöffnet ist, relativ zueinander bewegt werden können, wobei das erste Werkzeugteil (13) und/oder das zweite Werkzeugteil (15) beheizbar sind,
(b) Bereitstellen eines Sandwichhalbzeugs (1) mit einer ersten Deckschicht-Halbzeuglage (3) aus einer Langfaserverstärkten Pressmasse mit duromerer Matrix, einer zweiten Deckschicht-Halbzeuglage (5) aus einer langfaserverstärkten Pressmasse mit duromerer Matrix und zwischen diesen einer Kernschicht-Halbzeuglage (7), welche Drähte (24) aus Formerinnerungsmetall beinhaltet,
(c) in der geöffneten Stellung (19) der Pressvorrichtung (11) Einfügen des Sandwichhalbzeugs (1) in die Kavität (9),
(d) Bewegen des ersten und des zweiten Werkzeugteils (13, 15) relativ zueinander in die geschlossene Stellung (17),
(e) Zusammendrücken des ersten und des zweiten Werkzeugteils (13, 15), so dass das Sandwichhalbzeug (1) einen bestimmten Pressdruck erfährt, und Beheizen des ersten und/oder des zweiten Werkzeugteils (13, 15), so dass das Sandwichhalbzeug (1) eine bestimmte Verarbeitungstemperatur erfährt, wobei die Pressvorrichtung (11) einen Abstandshalter (21) aufweist, der in der geschlossenen Stellung (17) den minimalen Abstand zwischen dem ersten und dem zweiten Werkzeugteil (13, 15) definiert und damit die minimalen Abmessungen der Kavität (9) festlegt, und wobei der Abstandshalter (21) derart eingestellt wird, dass der Pressdruck in der geschlossenen Stellung (17) zwischen einem minimalen Verarbeitungsdruck der ersten und/oder der zweiten Deckschicht-Halbzeuglage (3, 5) und einem für die Kernschicht-Halbzeuglage (7) maximal zulässigen Grenzdruck liegt.

2. Verfahren nach Patentanspruch 1 **dadurch gekennzeichnet, dass** die Drähte (24) aus Formerinnerungsmetall in der Kernschicht (7') im Wesentlichen parallel zueinander angeordnet sind.

3. Verfahren nach Patentanspruch 1 **dadurch gekennzeichnet, dass** die Drähte (24) aus Formerinnerungsmetall in der Kernschicht (7') zueinander im Wesentlichen in Form eines Gewebes angeordnet sind.

4. Verfahren nach einem der vorangehenden Patentansprüche **dadurch gekennzeichnet, dass** die Drähte (24) aus Formerinnerungsmetall in der Kernschicht (7') beheizbar sind.

5. Verfahren nach einem der vorangehenden Patentansprüche **dadurch gekennzeichnet, dass** die Matrix der Deckschichten aus Epoxy-, Vinylester-, Phenoloder ungesättigtem Polysesterharz besteht.

6. Verfahren nach einem der vorangehenden Patentansprüche **dadurch gekennzeichnet, dass** die Kernschicht (7) aus einem Elastomer besteht.

7. Verfahren nach einem der vorangehenden Patentansprüche **dadurch gekennzeichnet, dass** die Kernschicht (7) aus Elastomer in Form kalandierter Folien besteht.

8. Verfahren nach einem der vorangehenden Patentansprüche **dadurch gekennzeichnet, dass** die Kernschicht (7) aus Elastomer in Form einer Mehrzahl kalandierter Folien besteht, zwischen denen die Drähte (24) aus Formerinnerungsmetall angeordnet sind.

9. Verfahren nach einem der vorangehenden Patentansprüche **dadurch gekennzeichnet, dass** die Drähte (24) aus Formerinnerungsmetall elektrisch beheizbar sind.

## Claims

1. A method of manufacturing a sandwich component (1') comprising at least two face layers (3', 5') and a core layer (7') including wires (24) of shape memory metal, the method comprising the steps of:
(a) providing a pressing device (11) having a first die part (13) and a second die part (15) movable relative to each other between a closed position (17) in which they enclose a cavity (9) and an open position (19) in which the cavity (9) is open to the environment, the first die part (13) and/or the second die part (15) being heatable,
(b) providing a sandwich semi-finished product (1) with a first cover layer semi-finished product layer (3) made of a long-fiber-reinforced molding compound with duromer matrix, a second cover layer semi-finished product layer (5) made of a long-fiber-reinforced molding compound with duromer matrix and between these a core layer semi-finished product layer (7) which includes wires (24) made of shape memory metal
(c) in the open position (19) of the pressing device (11), inserting the sandwich semi-finished product (1) into the cavity (9),
(d) moving the first and second mold parts (13, 15) relative to each other to the closed position (17),
(e) pressing the first and the second tool part (13, 15) together so that the sandwich semifinished product (1) experiences a certain pressing pressure, and heating the first and/or the second tool part (13, 15) so that the sandwich semifinished product (1) experiences a certain processing temperature, wherein the pressing device (11) comprises a spacer (21) which, in the closed position (17), defines the minimum distance between the first and the second tool part (13, 15) and thus defines the minimum dimensions of the cavity (9), and the spacer (21) being set in such a way that the pressing pressure in the closed position (17) lies between a minimum processing pressure of the first and/or the second cover layer semifinished product layer (3, 5) and a maximum permissible limit pressure for the core layer semi-finished product layer (7).

2. Method according to claim 1, **characterized in that** the wires (24) of shape memory metal in the core layer (7') are arranged essentially parallel to one another.

3. Method according to claim 1, **characterized in that** the wires (24) of shape memory metal in the core layer (7') are arranged essentially in the form of a fabric.

4. Method according to any of the preceding claims, **characterized in that** the wires (24) of shape memory metal in the core layer (7') can be heated.

5. Method according to any of the preceding claims, **characterized in that** the matrix of the surface layers consists of epoxy, vinyl ester, phenolic or unsaturated polyester resin.

6. Method according to any of the preceding claims, **characterized in that** the core layer (7) consists of an elastomer.

7. Method according to any of the preceding claims, **characterized in that** the core layer (7) consists of elastomer in the form of calendered films.

8. Method according to any of the preceding claims, **characterized in that** the core layer (7) consists of elastomer in the form of a plurality of calendered foils, between which the wires (24) of shape memory metal are arranged.

9. Method according to any of the preceding claims, **characterized in that** the wires (24) of shape memory metal can be heated electrically.

## Revendications

1. Procédé de fabrication d'un élément sandwich (1') comprenant au moins deux couches de revêtement (3', 5') ainsi qu'une couche centrale (7') qui contient des fils (24) en métal à mémoire de forme, le procédé comprenant les étapes suivantes :
(a) fournir un dispositif de pressage (11) avec une première partie de moule (13) et une seconde partie de moule (15) qui peuvent être déplacées l'une par rapport à l'autre entre une position fermée (17) dans laquelle elles enferment une cavité (9) et une position ouverte (19) dans laquelle la cavité (9) est ouverte sur l'environnement, la première partie de moule (13) et/ou la seconde partie de moule (15) pouvant être chauffées,
(b) préparation d'un demi-produit sandwich (1) avec une première couche de couverture semi-produit (3) en une masse de pressage renforcée par des fibres longues avec une matrice duromère, une deuxième couche de couverture semi-produit (5) en une masse de pressage renforcée par des fibres longues avec une matrice duromère et entre celles-ci une couche de noyau semi-produit (7), qui contient des fils (24) en métal à mémoire de forme,
(c) dans la position ouverte (19) du dispositif de pressage (11), insertion du demi-produit sandwich (1) dans la cavité (9),
(d) déplacement de la première et de la deuxième partie d'outil (13, 15) l'une par rapport à l'autre dans la position fermée (17),
(e) compression de la première et de la deuxième partie d'outil (13, 15), de sorte que le demi-produit sandwich (1) subit une pression de compression déterminée, et chauffage de la première et/ou de la deuxième partie d'outil (13, 15), de sorte que le demi-produit sandwich (1) subit une température de traitement déterminée, le dispositif de compression (11) présentant une entretoise (21) qui, dans la position fermée (17), définit la distance minimale entre la première et la deuxième partie d'outil (13, 15) et détermine ainsi les dimensions minimales de la cavité (9), et l'entretoise (21) étant réglée de telle sorte que la pression de pressage dans la position fermée (17) se situe entre une pression de traitement minimale de la première et/ou de la deuxième couche de couverture semi-finie (3, 5) et une pression limite maximale admissible pour la couche de noyau semi-finie (7).

2. Procédé selon la revendication 1, **caractérisé en ce que** les fils (24) en métal à mémoire de forme sont disposés sensiblement parallèlement les uns aux autres dans la couche centrale (7').

3. Procédé selon la revendication 1, **caractérisé en ce que** les fils (24) de métal à mémoire de forme sont disposés dans la couche centrale (7') sensiblement sous la forme d'un tissu.

4. Procédé selon l'une des revendications précédentes, **caractérisé en ce que** les fils (24) en métal à mémoire de forme dans la couche centrale (7') peuvent être chauffés.

5. Procédé selon l'une des revendications précédentes, **caractérisé en ce que** la matrice des couches de revêtement est constituée de résine époxy, d'ester vinylique, de résine phénolique ou de résine polyester insaturée.

6. Procédé selon l'une des revendications précédentes, **caractérisé en ce que** la couche centrale (7) est constituée d'un élastomère.

7. Procédé selon l'une des revendications précédentes, **caractérisé en ce que** la couche centrale (7) est constituée d'un élastomère sous forme de feuilles calandrées.

8. Procédé selon l'une des revendications précédentes, **caractérisé en ce que** la couche centrale (7) est en élastomère sous forme d'une pluralité de feuilles calandrées entre lesquelles sont disposés les fils (24) en métal à mémoire de forme.

9. Procédé selon l'une des revendications précédentes, **caractérisé en ce que** les fils (24) de métal à mémoire de forme peuvent être chauffés électriquement.
